# EUROPÄISCHE PATENTSCHRIFT

(11) **EP 2 927 165 B1**
(45) Veröffentlichungstag und Bekanntmachung des Hinweises auf die Patenterteilung: **19.10.2016**
(21) Anmeldenummer: 14163052.5
(22) Anmeldetag: 01.04.2014
(51) Int. Cl.: B65G 39/09

(54) **Tragrolle oder Antriebsrolle für einen Zugriemen eines Fördermittels**
Support roller or drive roller for a traction pulley of a conveyor
Galet de support ou galet d'entraînement d'une courroie de traction d'un moyen de transport

(43) Veröffentlichungstag der Anmeldung: 07.10.2015
(73) Patentinhaber: Arnold Jäger Holding GmbH, 30625 Hannover (DE)
(72) Erfinder: Jäger, Sebastian, 30657 Hannover (DE); Schmidt, Nick, 31275 Lehrte (DE)
(74) Vertreter: Bremer, Ulrich

(56) Entgegenhaltungen:
- WO-A1-98/06649
- DE-C- 860 023
- DE-U1- 8 024 757
- DE-U1- 20 212 872
- DE-U1-202005 004 566

## Beschreibung

Die vorliegende Erfindung betrifft eine Tragrolle oder Antriebsrolle für einen Zugriemen eines Fördermittels gemäß dem Oberbegriff des Anspruchs 1.

Derartige Rollen werden eingesetzt, um einen Zugriemen auf dessen endlosen Umlaufweg zu unterstützen oder anzutreiben..

Eine Rolle ist in der DE 80 24 757 U1 beschrieben. Diese Rolle weist eine Nabe auf, die mittels von zwei Kugellagern auf einem Lagerzapfen drehbar gelagert ist, der seinerseits mit einer Maschine verbunden ist, in der das die Zugriemen aufweisende Fördermittel Anwendung findet. Die Nabe ist als Kunststoffformkörper aus Polyamid ausgeführt und daher sehr maßgenau. Die Nabe kann daher unmittelbar zur drehfesten Verbindung mit den Außenringen der Kugellager benutzt werden. An ihren Außenumfang ist die Nabe mit einem Mantel aus Gummi ausgestattet, der als Lauffläche für den Zugriemen dient.

Diese in der DE 80 24 757 U1 beschriebene Rolle ist sehr leichtläufig und weist eine geringe Trägheit auf. Ein Nachteil besteht jedoch darin, dass diese Rolle aufgrund der großen Wandstärke der Nabe relativ schwer baut.

Das Dokument WO 98 06649 A1 offenbart eine Tragrolle nach dem Oberbegriff des Anspruchs 1.

Aufgabe der vorliegenden Erfindung ist es, eine gattungsgemäße Tragrolle oder Antriebsrolle zur Verfügung zu stellen, die sich einfacher herstellen lässt.

Diese Aufgabe wird erfindungsgemäß mit einer Rolle gelöst, die die Merkmale des Anspruchs 1 aufweist.

Eine erfindungsgemäße Tragrolle oder Antriebsrolle weist eine Nabe auf, die zweigeteilt ist, nämlich eine Innennabe und eine Außennabe aufweist. Diese Zweiteilung macht es möglich, die Außennabe mit der Lauffläche getrennt von der Innennabe herzustellen und beide Teile danach zu einer kompletten Nabe zu vereinigen. Daraus ergeben sich mehrere Vorteile.

Beim Vorgang des Aufbringens der Lauffläche wird die Nabe durch Schrumpfkräfte stark mechanisch belastet. Diese Kräfte können dadurch abgetragen werden, dass in die separat gefertigte, hohlzylindrische Außennabe ein passender zylindrischer Stempel eingeführt wird, der die Schrumpfkräfte aufnimmt. Die getrennt davon hergestellte Innennabe wird durch die Schrumpfkräfte also nicht tangiert, so dass ihre Geometrie (Lagersitze etc), so wie hergestellt, maßgenau bleibt. Bei einer einteiligen Nabe würde deren Geometrie, wenn sie nicht besonders robust ausgeführt ist, beeinträchtigt werden, was zum Beispiel den Lagereinbau erschweren, wenn nicht sogar verhindern (Ausschuss) könnte.

Auch bei robusten, schweren Naben aus Metall, die durch die beim Aufbringen der Polymerschicht wirkenden Schrumpfkräfte nicht in ihrer Maßhaltigkeit beeinträchtigt werden, ergeben sich bei Nutzung der vorliegenden Erfindung Vorteile. Bei einer Unterteilung der Nabe in eine dünnwandige und damit leichte Außennabe und eine schwere Innennabe, muss nur noch die Außennabe zum Aufbringen der Polymerschicht in die Form eingelegt und aufgeheizt werden. Dazu ist weniger Energie nötig, als wenn eine einteilige schwere Nabe aufgeheizt werden müsste. Das hat auch ergonomische Vorteile, da dabei nicht die schwere Nabe gehandhabt werden muss. Logistische Vorteile ergeben sich durch eine mögliche Trennung der Herstellung der polymeren Lauffläche und Montage der Rolle, weil Transportwege der schweren Metallteile, zum Beispiel Gussteile, eingespart werden können.

Weitere vorteilhafte Ausgestaltungen der Rolle ergeben sich aus den Unteransprüchen.

Die Erfindung wird nachstehend anhand eines Ausführungsbeispiels näher erläutert. In der dazugehörigen Zeichnung zeigt:
- Fig. 1: einen Querschnitt durch eine Außennabe einer Tragrolle oder Antriebsrolle,
- Fig. 2: einen Querschnitt durch eine Innennabe der Rolle mit vormontierten Kugellagern, und
- Fig. 3: eine fertigmontierte Rolle.

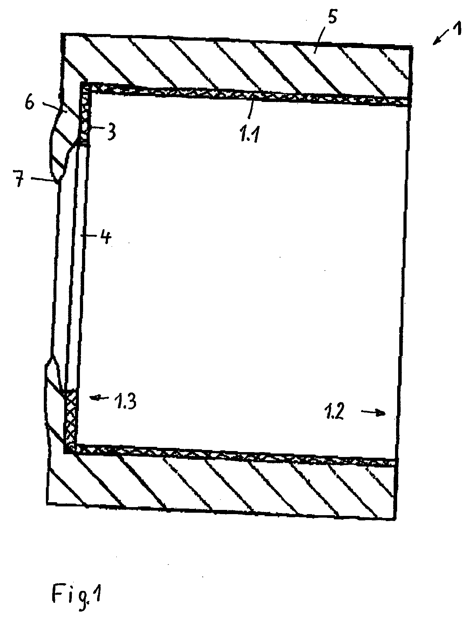

Die in Fig. 1 gezeigte Außennabe 1 ist als Hohlzylinder mit einem Mantel 1.1 und zwei Stirnseiten 1.2 und 1.3 als Spritzgussteil aus Polyamid ausgeführt. Während eine der Stirnseiten 1.2 der Außennabe 1 völlig offen ist, ist die andere Stirnseite 1.3 durch eine einstückig mit dem Mantel 1.1 ausgebildete Stirnwand 3 teilgeschlossen, in der eine kreisrunde zentrische Durchtrittsöffnung 4 vorgesehen ist. Die Außennabe 1 wird zu ihrer Komplettierung in eine Spritzgussform eingelegt, und in dieser an die Außenseite des Mantels 1.1 eine elastische Polymerschicht, zum Beispiel eine Gummischicht 5, als Lauffläche angespritzt, die in einer Fortsetzung 6 auf der Außenseite der Stirnwand 3 radial nach innen gezogen ist und in einer kreisrunden Dichtlippe 7 endet, deren Innendurchmesser auf der Innenseite bündig mit der Durchtrittsöffnung 4 abschließt, und von dort aus nach außen hin divergiert und schließlich mit einem Innendurchmesser endet, der geringer ist als der Innendurchmesser der Durchtrittsöffnung 4.

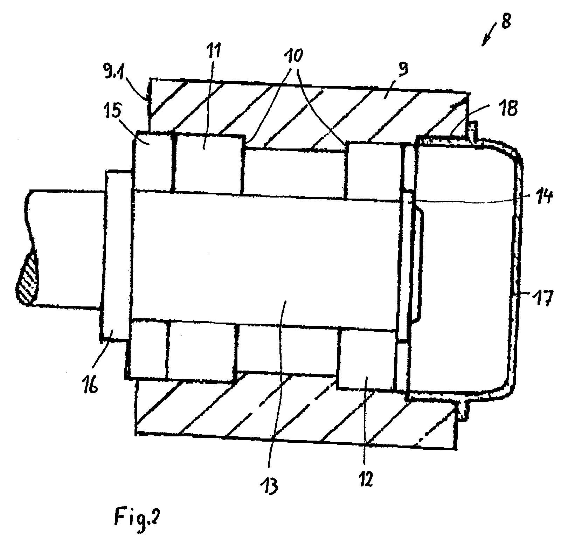

Die in Fig. 2 gezeigte Innennabe 8 ist ebenfalls als Spritzgussteil aus Polyamid hergestellt. Sie weist einen hohlzylindrischen Mantel 9 auf, dessen Wandstärke deutlich größer ist als die des Mantels 1.1 der Außennabe 1.

Die Innennabe 8 ist auf ihrer Innenseite abgestuft, wodurch zwei Schultern 10 gebildet sind. Diese Schultern 10 bilden Anschläge für die Außenringe von nur schematisch dargestellten Kugellagern 11 und 12. Bei der Vormontage der Rolle 2 wird das Kugellager 11, bezogen auf die zeichnerische Darstellung, mit Presssitz von links soweit in die Innennabe 8 eingeschoben, bis der Außenring des Kugellagers 11 an der ihm zugeordneten Schulter 10 der Innennabe 8 anliegt. Das Kugellager 12 wird in gleicher Weise von rechts in die Innennabe 8 bis zum Anschlag an die ihm zugeordnete Schulter 10 eingeschoben.

In einem weiteren, nicht dargestellten Ausführungsbeispiel weist die Innennabe 8 einen hohlzylindrischen Außenmantel und einen hohlzylindrischen Innenmantel auf, wobei Außen- und Innenmantel durch auf den Umfang verteilte, radiale Stege gegeneinander ausgesteift sind. Die Schultern 10 für die Kugellager 11 und 12 sind dann am Innenmantel der Innennabe ausgebildet. Eine derartig ausgeführte Innennabe 8 baut sehr leicht und ist dennoch stabil.

Nach der Montage der beiden Kugellager 11 und 12 wird, bezogen auf die zeichnerische Darstellung, ein Lagerzapfen 13 in die Innennabe 8 eingeschoben, die die Kugellager 11 und 12 durchsetzt. Der Zapfen 13 ragt aus dem Innenring des Kugellagers 12 hinaus und wird dort durch einen Sprengring 14 gegen Zurückziehen gesichert. An der Außenseite des Kugellagers 11 liegt ein Anpressring 15 an, der durch eine einstückig mit dem Zapfen 13 ausgebildete Schulter 16 in Anlage an das Kugellager 11 gehalten wird. Auf der anderen Seite der Innennabe 8 ist in den Mantel 9 eine Staubkappe 17 eingeschoben, um dort einen staubdichten Abschluss zu erreichen. Dazu ist auf der Innenseite des Mantels 9 eine entsprechende Aussparung 18 vorgesehen. Dieses Einschieben der Staubkappe 17 erfolgt unter Vorspannung, damit ein sicherer Halt der Staubkappe 17 an der Innennabe 8 gewährleistet ist.

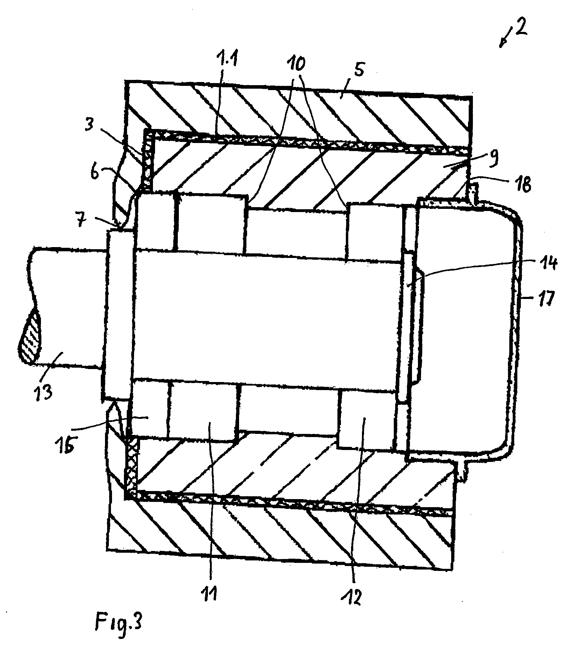

Die derart vormontierte Innennabe 8 wird zur Fertigmontage der Rolle 2 bezogen auf die zeichnerische Darstellung, soweit von links in die Außennabe 1 eingeschoben, bis die Stirnwand 3 an einer Stirnwand 9.1 des Mantels 9 der Innennabe 8 anliegt. Beim Einschieben der Innennabe 8 in Außennabe 9 gelangt schließlich die Dichtlippe 7 in Anlage an die Schulter 16 wie in Fig. 3 dargestellt ist. Damit ist auch auf dieser Seite eine staubdichte Abdichtung der Rolle 2 gewährleistet.

Eine drehfeste Verbindung zwischen Außennabe 1 und Innennabe 8 wird durch Verkleben hergestellt. Dazu wird vor dem Einschieben der Innennabe 8 in die Außennabe 1 ein geeigneter Klebstoff auf die Außenseite des Mantels 9 der Innennabe 8 aufgetragen.

Anstelle eines Stoffschlusses kann die drehfeste Verbindung zwischen der Außennabe 1 und der Innennabe 8 auch durch Formschluss oder durch Aufschrumpfen der Außennabe auf die Innennabe hergestellt werden.

Der Lagerzapfen 13 dient der Befestigung der Rolle 2 an einer Maschine, in der ein Zugriemen aufweisendes Fördermittel Anwendung findet. Der Lagerzapfen 13 kann natürlich auch, abweichend von der obigen Montagefolge, erst dann in die Rolle 2 eingeschoben werden, wenn die Außennabe 1 und die Innennabe 8 miteinander verbunden sind. Das gilt auch für die Staubkappe 17.

## Patentansprüche

1. Tragrolle oder Antriebsrolle für einen Zugriemen eines Fördermittels, aufweisend eine Nabe, die mittels von Kugellagern (11, 12) gelagert und an ihrem Außenumfang mit einer elastischen Polymerschicht (5) als Lauffläche für den Zugriemen versehen ist, wobei die Nabe aus einer hohlzylindrischen Außennabe (1), die die Polymerschicht (5) trägt, und einer hohlzylindrischen Innennabe (8), die die Kugellager (11, 12) aufnimmt, zusammengesetzt und die Innennabe (8) in die Außennabe (1) eingeschoben und drehfest mit dieser verbunden ist, **dadurch gekennzeichnet, dass** die Außennabe (1) einen Mantel (1.1) und zwei Stirnseiten (1.2, 1.3) aufweist, wobei die eine Stirnseite (1.2) völlig offen ist und die andere Stirnseite (1.3) durch eine einstückig mit dem Mantel (1.1) ausgebildete Stirnwand (3) teilgeschlossen ist, in der eine kreisrunde zentrische Durchtrittsöffnung (4) vorgesehen ist.

2. Rolle nach Anspruch 1, **dadurch gekennzeichnet, dass** Außennabe (1) und Innennabe (8) durch Stoffschluss miteinander verbunden sind.

3. Rolle nach Anspruch 1, **dadurch gekennzeichnet, dass** Außennabe (1) und Innennabe (8) durch Formschluss miteinander verbunden sind.

4. Rolle nach Anspruch 1, **dadurch gekennzeichnet, dass** Außennabe (1) und Innennabe (8) durch Aufschrumpfen der Außennabe (1) auf die Innennabe (8) miteinander verbunden sind.

5. Rolle nach einem der Ansprüche 1 bis 4, **dadurch gekennzeichnet, dass** auf der Außenseite des Mantels (1.1) die Polymerschicht (5) angeordnet ist, die in einer Fortsetzung (6) auf der Außenseite der Stirnwand (3) radial nach innen gezogen ist und in einer kreisrunden Dichtlippe (7) endet.

6. Rolle nach Anspruch 5, **dadurch gekennzeichnet, dass** die Dichtlippe (7) einstückig mit der Polymerschicht (5) hergestellt ist.

7. Rolle nach Anspruch 5, **dadurch gekennzeichnet, dass** die Dichtlippe (7) separat an die Polymerschicht (5) angespritzt ist.

8. Rolle nach einem der vorstehenden Ansprüche, **dadurch gekennzeichnet, dass** die Innennabe (8) einen hohlzylindrischen Außenmantel und einen dazu konzentrisch angeordneten hohlzylindrischen Innenmantel aufweist, die durch auf den Umfang verteilte Stege gegeneinander ausgesteift sind.

9. Rolle nach einem der vorstehenden Ansprüche, **dadurch gekennzeichnet, dass** die Außennabe (1) und die Innennabe (8) als Spritzgussteile aus einem Polymer, z. B. Polyamid, hergestellt sind.

## Claims

1. Support roller or drive roller for a traction pulley or a conveyor, comprising a hub which is mounted by means of ball bearings (11, 12) and is provided on the outer circumference thereof with an elastic polymer layer (5) as the running surface for the traction pulley, wherein the hub is composed of a hollow cylindrical outer hub (1), which supports the polymer layer (5), and a hollow cylindrical inner hub (8), which receives the ball bearing (11, 12) and the inner hub (8) is inserted into the outer hub (1) and is connected to the latter in a non-rotating manner, **characterised in that** the outer hub (1) comprises a cover (1.1) and two end faces (1.2, 1.3), wherein the one end face (1.2) is completely open and the other end face (1.3) is partially closed by an end wall (3) formed integrally with the cover (1.1) in which end wall a circular centric through opening (4) is provided.

2. Roller according to Claim 1, **characterised in that** outer hub (1) and inner hub (8) are connected to each other by a material closure.

3. Roller according to Claim 1, **characterised in that** outer hub (1) and inner hub (8) are connected to each other by a form fit closure.

4. Roller according to Claim 1, **characterised in that** outer hub (1) and inner hub (8) are connected to each other by shrinking the outer hub (1) on the inner hub (8).

5. Roller according to any one of Claims 1 to 4, **characterised in that** the polymer layer (5) is arranged on the outer side of the cover (1.1), which is drawn radially inwards in a continuation (6) to the outer side of the end wall (3) and ends in a circular sealing lip (7).

6. Roller according to Claim 5, **characterised in that** the sealing lip (7) is manufactured integrally with the polymer layer (5).

7. Roller according to Claim 5, **characterised in that** the sealing lip (7) is injection-moulded separately onto the polymer layer (5).

8. Roller according to any one of the preceding claims, **characterised in that** the inner hub (8) comprises a hollow cylindrical outer cover and a hollow cylindrical inner cover arranged concentrically thereto which are braced against each other by webs distributed on the circumference.

9. Roller according to any one of the preceding claims, **characterised in that** the outer hub (1) and the inner hub (8) are manufactured as injection moulded parts from a polymer, e.g. polyamide.

## Revendications

1. Rouleau porteur ou rouleau d'entraînement pour une courroie de traction d'un système convoyeur présentant un moyeu supporté par des roulements à billes (11, 12) et recouvert en périphérie d'une couche de polymère (5) élastique servant de bande de roulement à la courroie de traction, le moyeu étant constitué d'un moyeu extérieur (1) cylindrique creux portant la couche de polymère (5) et d'un moyeu intérieur (8) cylindrique creux où sont logés les roulements à billes (11, 12) et le moyeu intérieur (8) étant inséré dans le moyeu extérieur (1) et solidarisé avec celui-ci, **caractérisé en ce que** le moyeu extérieur (1) présente une enveloppe (1.1) et deux faces opposées (1.2, 1.3), l'une des faces (1.2) étant entièrement ouverte et l'autre face (1.3) étant partiellement obturée par la paroi frontale (3) constituant une seule pièce avec l'enveloppe (1.1), un passage (4) central circulaire étant prévu dans cette paroi frontale.

2. Rouleau selon la revendication 1, **caractérisé en ce que** le moyeu extérieur (1) et le moyeu intérieur (8) sont liés entre eux par verrouillage chimique.

3. Rouleau selon la revendication 1, **caractérisé en ce que** le moyeu extérieur (1) et le moyeu intérieur (8) sont liés entre eux par verrouillage de forme.

4. Rouleau selon la revendication 1, **caractérisé en ce que** le moyeu extérieur (1) et le moyeu intérieur (8) sont reliés entre eux par emmanchement du moyeu extérieur (1) sur le moyeu intérieur (8).

5. Rouleau selon l'une des revendications 1 à 4, **caractérisé en ce que** la face extérieure de l'enveloppe (1.1) est recouverte de la couche de polymère (5) qui continue vers l'intérieur de manière radiale par un prolongement (6) sur la face extérieure de la paroi frontale (3) et qui se termine par une lèvre d'étanchéité (7) circulaire.

6. Rouleau selon la revendication 5, **caractérisé en ce que** la lèvre d'étanchéité (7) constitue une seule pièce avec la couche de polymère (5).

7. Rouleau selon la revendication 5, **caractérisé en ce que** la lèvre d'étanchéité (7) est injectée séparément sur la couche de polymère (5).

8. Rouleau selon l'une des revendications précédentes, **caractérisé en ce que** le moyeu intérieur (8) présente une enveloppe extérieure cylindrique creuse et une enveloppe intérieure cylindrique creuse concentrique à celle-ci, rigidifiées entre elles par des barrettes réparties sur le pourtour.

9. Rouleau selon l'une des revendications précédentes, **caractérisé en ce que** le moyeu extérieur (1) et le moyeu intérieur (8) sont réalisés comme des pièces moulées par injection en polymère (par ex. polyamide).
